Europäisches Patentamt

European Patent Office

Office européen des brevets

(19)

(11) Publication number: **0 062 978**
A2

(12) # EUROPEAN PATENT APPLICATION

(21) Application number: **82301462.6**

(22) Date of filing: **22.03.82**

(51) Int. Cl.³: **G 06 F 11/00**

(30) Priority: **06.04.81 GB 8110676**

(43) Date of publication of application:
**20.10.82 Bulletin 82/42**

(84) Designated Contracting States:
**AT DE FR IT NL SE**

(71) Applicant: **The Secretary of State for Industry in Her Britannic Majesty's Government of the United Kingdom of Great Britain and Northern Ireland 1 Victoria Street London SW1H 0ET(GB)**

(72) Inventor: **Kanellopoulos, Nicholas Gregory c/o Mr G. Vafias, Makriyiani 3 Athens(GR)**

(72) Inventor: **Ghani, Noordin 187 Osborne Road Newcastle-upon-Tyne(GB)**

(72) Inventor: **Horne, David Anthony 7 Leadgate Allendale Northumberland(GB)**

(72) Inventor: **Dobson, John Edward 7 Cheyne Road Prudhoe Northumberland(GB)**

(72) Inventor: **Smart, John Derek 15 Woodlands Close South Ascot Berkshire(GB)**

(74) Representative: **Williams, Arthur Wyn Spencer et al, Procurement Executive, Ministry of Defence Patents 1A(4), Room 1932 Empress State Building Lillie Road London SW6 1TR(GB)**

(54) Apparatus for assisting fault-finding in data processing systems.

(57) The invention relates to an apparatus for assisting fault-finding in a data processing system (10) having a target CPU (11 or 41) and a program under test. A record keeper (16) records input data and interrupts and a timing counter (21) measures time of interrupt or data input by counting instruction fetch events. The recorded information and each respective count is stored in a backing store (22). This produces a permanent record of external stimuli applied to the CPU (11 or 41) during program execution. Execution is replayed by a replay controller (30 or 48) arranged to re-run the program under test in combination with the recorded external stimuli applied at appropriate occurrence times. Replay may be carried out using a host computer incorporating a CPU simulator program.

Fig.1.

TITLE:   APPARATUS FOR ASSISTING FAULT-FINDING IN DATA PROCESSING SYSTEMS

This invention relates to apparatus for assisting fault-finding or "debugging" in data processing systems including central processing units (hereinafter called CPUs) and more particularly although not exclusively to such systems incorporating microprocessors.  The development of computer software to operate in a real time computer system, ie respond to external stimuli or events in the real world, has traditionally been a difficult task requiring a high degree of hardware and software expertise.  The manufacturers of mainframes and minicomputers have responded to this problem by offering sophisticated operating systems and other supporting software tools which provide a well engineered environment within which a large class of real time systems can be developed and run for their particular computer hardware.  The operating system, or real time executive, usually provides facilities and interfaces for handling the asynchronous characteristics of an application system, whilst the other software tools such as editors, assemblers, language compilers and linkers provide the normal facilities for preparing and constructing application programs.  However these tools usually give little, if any, assistance with the task of testing and debugging the real time nature of the software they are used to produce.  The task of developing real time programs for use in microprocessors has to overcome a number of additional problems not usually encountered when using established mainframes or minicomputers.  These additional problems include:-

the target microprocessor for which the programs are intended does not have the hardware and/or software resources necessary to support a viable program development environment;

the applications which use microprocessors utilise unusual I/O devices for which there is neither any standard operational software nor any standard interface;

Furthermore, one of the most intractable aspects of debugging real time programs is the unrepeatability of problems occurring as a result of real time interactions.  Conventional debugging procedures frequently have the effect of changing the operation of the computer system of interest, so that the problem to be corrected may either be absent or altered by the use of the debugging process.

It is an object of the present invention to provide an apparatus for assisting fault-finding in data processing systems, the apparatus having improved capability for detecting faults arising from real time interactions.

The present invention provides an apparatus for assisting fault-finding in a data processing system having a target CPU and a program under test, the apparatus including means for detecting and recording data input and interrupt signals applied to the CPU during program execution and derived from external stimuli, means for measuring and recording the occurrence time of such signals relative to the CPUs time frame and means for replaying the program under test in synchronous combination with the recorded data input and interrupt signals applied at appropriate relative occurrence times. The advantage of the invention is that the logical behaviour of the CPU during real-time execution of the program may be reproduced repeatedly during replay and any real-time faults are permanently available for tracing and correction.

The CPU may be a microprocessor. The data input and interrupt signals are recorded by means adapted to detect signals on the CPU bus without affecting CPU operation. The signal occurrence time is preferably measured by means adapted to count CPU instruction fetch events and to record the instantaneous count thereof at signal detection.

The means for replaying the program under test and the recorded signals may conveniently be a host computer incorporating a simulator program arranged to simulate target CPU operation and to reconstruct target data read and interrupt events from the recorded data input and interrupt signals.

The apparatus preferably includes a backing store to receive input data and input signals together with their instantaneous count.

The monitoring means may comprise a bus monitoring unit connected to the target CPU bus and operative to produce for each monitored signal a digital output consisting of an event code, an occurrence time event count derived from the counting means, a data word, an external port address and the low-order byte of an instruction address.
The monitoring means may also include a data reduction unit for compressing stored input data and a data transmission unit for transmission of stored input data and interrupt event information to the backing store.

When incorporating a host computer and simulator program for replay of the program under test, the apparatus is preferably arranged to transfer to the host computer the program under test, the target CPU initial state and the external stimuli record contained in the backing store. The program under test is then replayed on the simulator-programmed host computer in combination with the information derived from the external stimuli. In this way, the real-time target execution of the program under test is permanently available for tracing and correction of faults including those arising from real-time interactions.

In order that the invention might be more fully understood, embodiments thereof will now be described by way of example only, with reference to the accompanying drawings, in which:-

Figure 1 is a schematic block diagram illustrating monitoring of program execution on a target computer,

Figure 2 is a schematic block diagram illustrating program execution replay, and

Figure 3 is a schematic block diagram of an embodiment of the invention arraged for recordal and replay using a host computer.

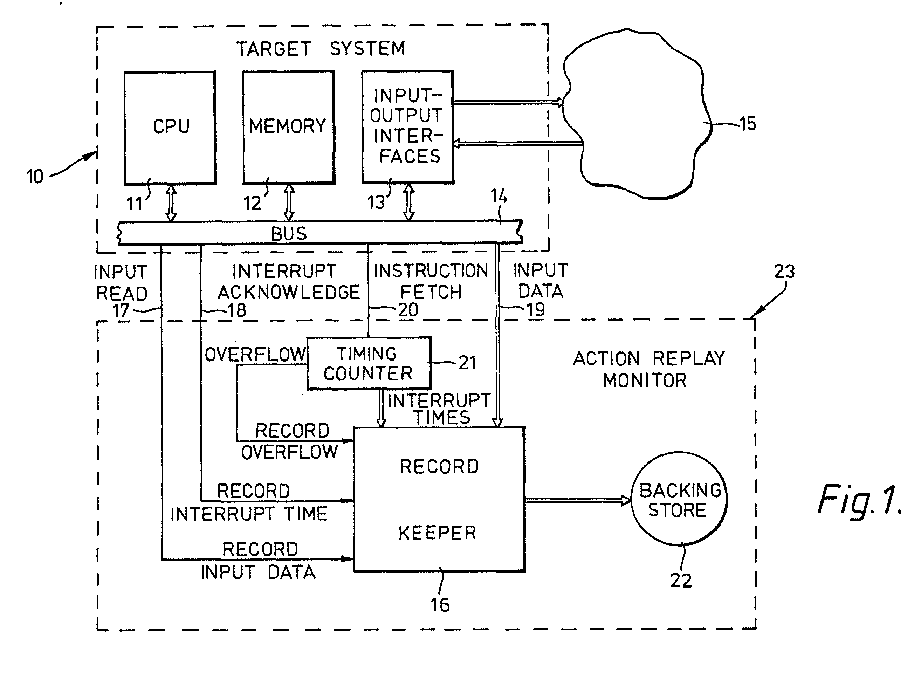

Referring to Figure 1, a target computer system 10 comprises a central processing unit or CPU 11, a memory unit 12 containing the program to be executed or tested, and an input/output interface unit 13 connected to a bus 14. The interface unit 13 is connected to an external apparatus 15 for which the target system 10 processes data. A record keeper 16 is connected to the bus 14 by connections 17, 18 and 19 representing the lines which carry the "input read" and "interrupt acknowledge" signals and input data respectively. An instruction fetch line 20 is connected to a timing counter 21, and the counter output is connected to the record keeper 16 having a backing store 22. The record keeper 16, timing counter 21 and connections thereto are collectively termed an action replay monitor 23.

The arrangement of Figure 1 operates as follows. The record keeper 16 monitors the bus 14 for input activity and records input da interrupt requests and time of interrupt. The timing counter 21 provides the interrupt time by counting the regular instruction fetch events on the bus 14. The counter 21 is finite in size and periodically overflows, so the record keeper records each overflow event for additional time monitoring. The backing store 22 stores sequentially the record produced by the record keeper 16.

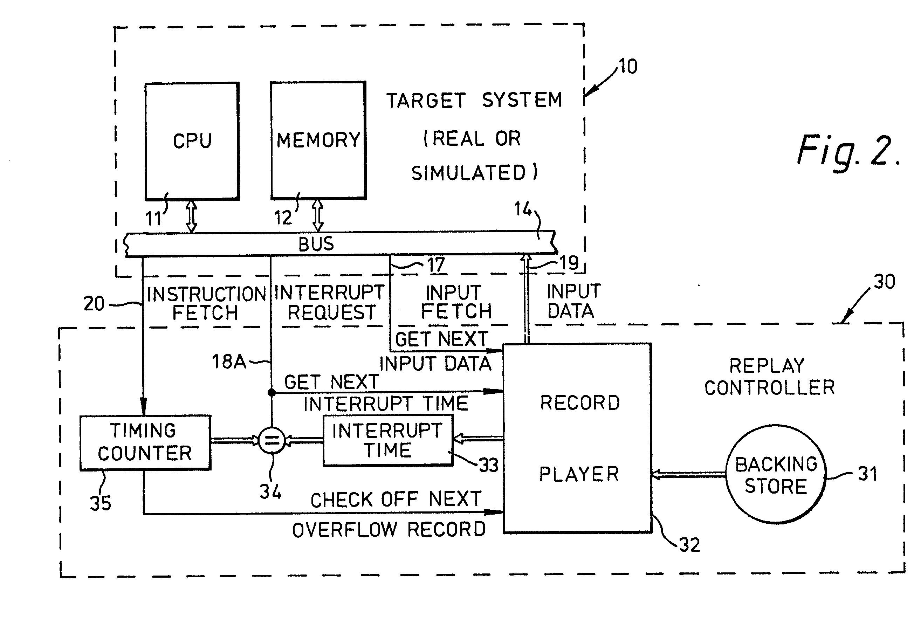

Referring now to Figure 2, a replay controller 30 includes a backing store 31 containing the record of information produced by the record keeper 16 of Figure 1. The replay controller 30 contains a record player 32 connected to an interrupt time register 33. A comparator circuit 34 is connected to compare outputs of the interrupt time register 33 and a timing counter 35. The instruction fetch line 19 of the bus 14 is connected to an input of the timing counter 35, and the interrupt request line 18A is connected to the output of comparator circuit 34. The record player 32 is connected to the interrupt request, input fetch and input data lines of the bus 14.

The arrangement of Figure 2 operates as follows. The record of events in the backing store 31, produced by means of the Figure 1 apparatus, is employed to supply input data and interrupt signals to the target system 10. The record player 32 reconstructs the original events recorded from the bus 14, and feeds these recorded events to the bus 14 to effect re-execution of the original program instructions. Time is measured by counting instruction fetch signals with a counter 35 identical to the orginal counter 21. The comparator unit 34 generates an appropriate interrupt request signal when "elapsed time" in the counter 35 matches the interrupt time in the register 33 and requests the record player 32 to update the interrupt time register 33. Every time the counter 35 overflows, the record player 32 ticks off an overflow record. Every time the CPU 11 is detected trying to read from an input port, the record player 32 provides the CPU with the appropriate piece of recorded data.

In the instance where the CPU may respond to a number of different types of interrupt requests, it is necesary for the action replay monitor 23 to additionally record the type as well as the time of each interrupt. The replay controller has then to generate the right type of interrupt request at the appropriate time. Other ways of measuring the time of events include counting other types of regular signals, such as CPU clock signals, real-time clock signals or bus transaction signals. In order to minimize the occurrence of overflow during such counting it is possible to combine this periodic counting with the counting of less regular events, for example, input/output operations, or CPU events such as the execution of "jump" instructions.

To reduce the rate and quantity of data to be stored, the record keeper may carry out data compression procedures, eg counting consecutive identical data inputs, and storing only one copy, together with the count. The record player would then reconstruct the actual sequence.

To check for the possibility of the re-execution diverging from the orignal due to unforeseen differences between the original hardware and the replay system, it may be preferable to record extra information together with that necessary for replay (eg the program address during an interrupt, the "time" of an input operation, the identity of the input port involved). During reply this extra information would be used by the replay controller to check for divergence.

As will be apparent to skilled electronic engineers the action replay monitor 23 and replay controller 30 might conveniently be a single unit having common elements (storage device, timing counter etc) for equivalent functions. The unit would be switchable between record and replay modes.

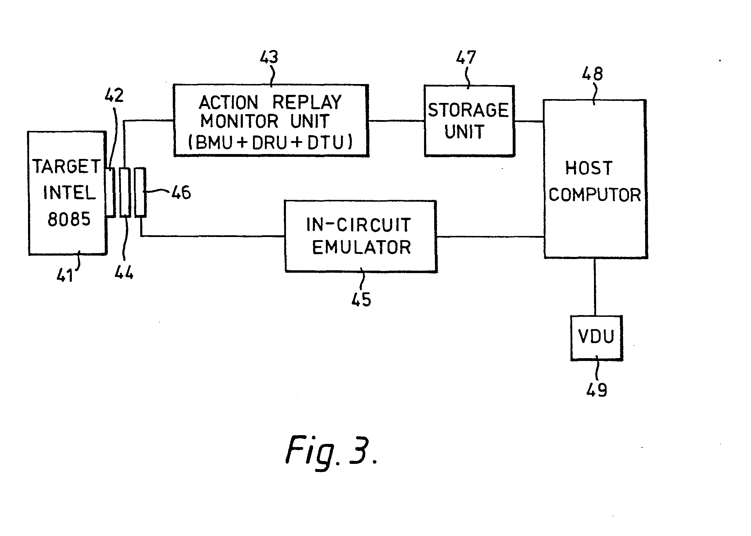

Referring now to Figure 3, there is shown a further embodiment of the invention arranged for monitoring and replay using a host computer. An Intel 8085 target microcomputer 41 has a 40 pin CPU socket 42 connected to an action reply monitor (ARM) 43 via an action replay probe 44. A conventional in-circuit emulator (ICE) 45 is connected to the probe 44 and CPU socket 42 by an ICE plug 46. The ARM 43 is connected to a storage unit 47 in the form of a Hewlett Packard HP-85 desktop computer programmed to accept and store a stream of data presented to it via its standard serial input/output port. The storage unit 47 and ICE 45 are connected to a host comuter 48 having a visual display unit (VDU) 49.

The ARM 43 consists of a CPU bus monitor unit (BMU), a data reduction unit (DRU) and a data transmission unit (DTU) (not shown individually). Via the ARM probe 44, the BMU detects events occurring within the microprocessor 41 from the signals on the microprocessor pins in the CPU socket 42. The BMU detects microprocessor opcode fetches, interrupt activity and input port reads. The Intel 8085 microprocessor can accommodate up to 256 input ports, and the ARM 43 is correspondingly arranged to cope with up to 256 different port addresses. For each event detected by the BMU, a package of information comprising an event code together with bytes of data and addresses as appropriate is placed into a hardware first-in-first-out (FIFO) queue thus allowing the BMU to carry out monitoring at full speed. The FIFO is a 44 bit, 16 position unit accommodating a 16 bit count, a 4 bit event code, an 8 bit data word, an 8-bit port address and the low-order byte of an instruction address. The BMU also has a 16-bit counter which counts opcode fetches to microprocessor execution time. The BMU notifies input events to the DRU, and each interrupt with associated count and each counter overflow event is notified to the DTU.

The DRU carries out a degree of data reduction on input events appearing at the head, or output of the BMU's FIFO queue. The DRU examines the information associated with each input event to establish whether:-

    (a)    the new input data from a port is identical to the immediately preceding data from that port, or

    (b)    the new input data is different, and the previous data has been seen more than once, or

    (c)    the new input data is different, but the previous data has been seen once or not at all.

In the case of (a), the DRU merely increments the count for the relevant port. In the case of (b), the DTU is required to transmit the new data together with the count for the previous data, whereas for (c) the DTU is required to transmit only the new data. In order to furnish the DTU with information for transmission, the DRU has a 256 by 24 bit table in which it can enter and update a data byte together with a 16-bit count for each of the possible 256 ports of the Intel 8085 microprocessor.

The DTU responds to the input events notified by the DRU and the interrupt and counter overflow events notified by the BMU, and transmits the relevant items of information to the storage unit 47 over a standard RS 232 serial link. It has an industry standard UART (Universal Asynchronous Receiver-Transmitter) with a 64 position, 8 bit FIFO queue on the input. For each type of event, the DTU control routes an appropriate sequence of information bytes into the FIFO.

The host computer 48 has a similar program in the programming language "C". The program is arranged to reconstruct the external inputs seen by the target microprocessor 41 from the data captured by the ARM 43. The principles of microprocessor simulator programs are well-known in computer technology for the purposes of simulating microprocessor operations. The simulator employed on the host computer 48 is equivalent to a conventional simulator modified to accept external stimuli stored sequentially. As will be described later, the host computer 48 stores the program under test (PUT) used by the target microcomputer 41. In addition, after the PUT has run on the target, data recorded in the storage unit 47 is transferred to a data file on the host. The simulator program reconstructs events occurring on the target 41 for the purpose of performing on the host a replay of the target PUT execution. To reconstruct interrupt events, the simulator maintains a count of opcode fetches as in the BMU. When the next event in the data file is an interrupt and the stored BMU count in the data file equals the simulator's count, an interrupt of the correct type is simulated. To reconstruct data read from target input ports, the simulator maintains a table in the host similar to that in the DRU. Thus when the PUT instructs the simulator to do a read from an input port, and the next event in the data file is not associated with that port, the simulator will assume that the data read is in its table, and increment the count for that port. If the next event is a count overflow on that port, the simulator will simply zero the count in its table. If the next event is a read where the previous data had been read more than once, the simulator will compare the count in its table with the count in the event record; if identical, the old data in the table is discarded, and the new data inserted, and presented to the PUT. The new count will be set to 1. This updating will occur anyway if the next event is a read where the previous data had not been seen more than once.

The arrangement of Figure 3 operates as follows. The PUT to be executed on the target microcomputer 41 is generated on the host computer 48 by the user operating the VDU 49, making use of standard programming tools available on the host. The PUT is then transmitted into the memory of the target via the ICE 45, which is a commercially available system. The host 48 then commands the ICE to transmit the target's internal state back for storage in an initial state file of the host. The internal state consists of the contents of the target memory and registers.

The target microcomputer 41 is then made to execute the PUT. The ARM 43, or BMU/DRU/DTU combination, captures all information necessary for replay, compresses it, and transmits it to the storage unit 47. At the end of the PUT run, the data captured in the storage unit 47 is transmitted to the host computer 48 and stored in a data file of the host.

Replay of the PUT execution is then achieved by running the simulator program on the host. The simulator models the behaviour of the 8085 microprocessor. It initialises its model of the microprocessor and memory from the initial-state file, and then proceeds to execute the PUT contained therein. The simulator uses the contents of its data file (captured by the ARM 43) to recreate the inputs seen by the target during monitoring, thus ensuring that the PUT follows exactly the same sequence of operations on the host as during the original execution by the target. The simulator provides the user with a set of commands to allow him to control and observe the replay execution of the PUT, so that faults may be repeated and traced for subsequent correction.

The invention provides the important advantage that hitherto unrepeatable real-time faults in program execution become permanently available for study and correction. The invention produces a record of external stimuli experienced by the CPU, and reconstructs those stimuli to provide a re-execution of the original program in undistorted form. During re-execution or replay, the user is free to investigate the behaviour of the program without regard to the real-time. constraints which existed during the original execution. Accordingly, the user need not fear that his investigations will distort the program execution.

CLAIMS

1.    Apparatus for assisting fault-finding in a data processing
system (10) having a target CPU (11 or 41) and a program under
test, characterised in that the apparatus includes monitoring
means (16) for detecting and recording data input and interrupt
signals applied to the CPU (11 or 41) during program execution
and derived from external stimuli, counting means (21) for
measuring and recording the occurrence time of such signals relative
to the CPU's time frame and means for replaying the program under.
test (30 or 48) in synchronous combination with the recorded data
input and interrupt signals applied at appropriate relative
occurrence times.

2.    Apparatus according to claim 1 characterised in that the target
CPU (11 or 41) is a microprocessor.

3.    Apparatus according to claim 1 characterised in that the counting
means (21) is arranged to count CPU instruction fetch events and to
record the instantaneous count thereof at detection of each data
input and interrupt signal.

4.    Apparatus according to claim 3 characterised in that the
monitoring means (16) and counting means (21) are responsive to data
input and interrupt signals and instruction fetch events respectively
occurring on the target CPU bus (14).

5.    Apparatus according to claim 4 characterised in that the
monitoring means (16) includes means for generating and recording a
respective event code for each type of information recorded.

6.    Apparatus according to claim 3, 4 or 5 characterised in that the
apparatus includes a backing store (22, 31 or 47) for storing
sequentially each data input or interrupt signals together with an
appropriate respective event code and instantaneous count.

7.    Apparatus according to claim 6 characterised in that the means
for replaying the program under test includes a host computer (48)
arranged by means of a simulator program to provide means for
replaying the program under test.

8.    Apparatus according to claim 7 characterised in that the
simulator-programmed host computer (48) has an initial state file for
recording the initial state of the target CPU (11) when containing
the program under test and a data file for recording sequentially
data input and interrupt events.

9.    Apparatus according to claim 8 characterised in that the monitoring means and the counting means are provided by a bus monitor unit (included in ARM 43) incorporating an instruction fetch counter, the bus monitor unit being arranged to record an event code, a data word, an address and an event count for monitored events.

10.  Apparatus according to claim 9 characterised in that there is provided a data reduction device (included in ARM 43) responsive to the bus monitor unit and arranged to store any sequence of identical data inputs by storing one such input and incrementing the event count appropriately to indicate the number of data inputs in the sequence.

11.  Apparatus according to claim 10 characterised in that there is provided a data transmission device being operative to transmit to the backing store 47 event information comprising data input signals from the data reduction device and interrupt signals from the bus monitor unit together with the corresponding event count.

Fig.1.

TARGET SYSTEM

CPU  MEMORY  INPUT-OUTPUT INTER-FACES

11  12  13  14

BUS

INPUT READ 17

INTERRUPT ACKNOWLEDGE 18

INSTRUCTION FETCH 20

INPUT DATA 19

10

15

23

ACTION REPLAY MONITOR

OVERFLOW

TIMING COUNTER 21

INTERRUPT TIMES

RECORD OVERFLOW

RECORD INTERRUPT TIME

RECORD INPUT DATA

RECORD KEEPER 16

BACKING STORE 22

1/3

0062978

Fig. 2.

3/3

0062978

Fig. 3.